# NEUE EUROPÄISCHE PATENTSCHRIFT

(11) **EP 2 046 402 B2**
(45) Veröffentlichungstag und Bekanntmachung des Hinweises auf die Entscheidung über den Einspruch: **11.09.2019**
(45) Hinweis auf die Patenterteilung: 16.09.2015
(21) Anmeldenummer: 07787411.3
(22) Anmeldetag: 12.07.2007
(51) Int. Cl.: C08F 2/00, A61L 15/22, A61L 15/60, C08F 2/10, C08F 4/34, C08F 20/04, C08F 4/00, C08F 220/06, C08F 222/10, C08F 4/04

(54) **VERFAHREN ZUR HERSTELLUNG WASSERABSORBIERENDER POLYMERPARTIKEL DURCH POLYMERISATION VON TROPFEN EINER MONOMERLÖSUNG**
METHOD FOR PRODUCING WATER-ABSORBING POLYMER PARTICLES BY POLYMERIZING DROPLETS OF A MONOMER SOLUTION
PROCÉDÉ DE FABRICATION DE PARTICULES POLYMÈRES HYDROABSORBANTES PAR POLYMÉRISATION DE GOUTTES D'UNE SOLUTION MONOMÈRE

(30) Priorität: 19.07.2006 EP 06117492
(43) Veröffentlichungstag der Anmeldung: 15.04.2009
(73) Patentinhaber: BASF SE, 67056 Ludwigshafen am Rhein (DE)
(72) Erfinder: LÖSCH, Dennis, 67122 Altrip (DE); SEIDL, Volker, 68199 Mannheim (DE); WEISMANTEL, Matthias, 63637 Jossgrund (DE)
(74) Vertreter: BASF IP Association
(86) Internationale Anmeldenummer: PCT/EP2007/057140
(87) Internationale Veröffentlichungsnummer: WO 2008/009611

(56) Entgegenhaltungen:
- WO-A-99/25393
- WO-A-2005/056177
- US-A1- 2003 208 022

## Beschreibung

Die vorliegende Erfindung betrifft ein Verfahren zur Herstellung wasserabsorbierender Polymerpartikel durch Polymerisation von Tropfen einer Monomerlösung, wobei die Monomerlösung mindestens zwei Initiatoren enthält.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Eigenschaften der wasserabsorbierenden Polymere können über den Vernetzungsgrad eingestellt werden. Mit steigendem Vernetzungsgrad steigt die Gelfestigkeit und sinkt die Absorptionskapazität. Dies bedeutet, dass mit steigender Absorption unter Druck (AUL) die Zentrifugenretentionskapazität (CRC) abnimmt (zu sehr hohen Vernetzungsgraden nimmt auch die Absorption unter Druck wieder ab).

Zur Verbesserung der Anwendungseigenschaften, wie beispielsweise Flüssigkeitsleitfähigkeit (SFC) in der Windel und Absorption unter Druck (AUL), werden wasserabsorbierende Polymerpartikel im allgemeinen nachvemetzt. Dadurch steigt nur der Vernetzungsgrad der Partikeloberfläche, wodurch die Absorption unter Druck (AUL) und die Zentrifugenretentionskapazität (CRC) zumindest teilweise entkoppelt werden können. Diese Nachvernetzung kann in wässriger Gelphase durchgeführt werden. Vorzugsweise werden aber gemahlene und abgesiebte Polymerpartikel (Grundpolymer) an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

Durch Sprühpolymerisation konnten die Verfahrensschritte Polymerisation und Trocknung zusammengefasst werden. Zusätzlich konnte die Partikelgröße durch geeignete Verfahrensführung in gewissen Grenzen eingestellt werden.

Die Herstellung wasserabsorbierender Polymerpartikel durch Polymerisation von Tropfen einer Monomerlösung wird beispielsweise in EP-A-0 348 180, WO-A-96/40427, US-5,269,980, DE-A-103 14 466, DE-A-103 40 253 und DE-A-102004024437 beschrieben.

Aufgabe der vorliegenden Erfindung war die Bereitstellung eines verbesserten Verfahrens zur Herstellung wasserabsorbierender Polymerpartikel.

Gelöst wurde die Aufgabe durch ein Verfahren zur Herstellung wasserabsorbierender Polymerpartikel durch Polymerisation von Tropfen einer Monomerlösung, enthaltend
a) mindestens ein wasserlösliches ethylenisch ungesättigtes Monomer,
b) wahlweise einen Vernetzer,
c) mindestens einen Initiator,
d) mindestens einen weiteren Initiator und
e) Wasser,
wobei die Monomerlösung in der Gasphase vertropft oder versprüht wird, dadurch gekennzeichnet, dass der Initiator c) ein Peroxid, mit Ausnahme von Persulfat, ist, der Initiator d) eine Azoverbindung und/oder ein Photoinitiator und/oder ein Redox-Initiator ist und das Molverhältnis von Initiator c) zu Initiator d) mindestens 1:8 beträgt.

Die Monomeren a) sind wasserlöslich, d.h. die Löslichkeit in Wasser bei 23°C beträgt mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Die Konzentration der Monomeren a) in der Monomerlösung beträgt üblicherweise 2 bis 80 Gew.-%, vorzugsweise 5 bis 70 Gew.-%, besonders bevorzugt 10 bis 60 Gew.-%.

Geeignete Monomere a) sind beispielsweise ethylenisch ungesättigte Carbonsäuren, wie Acrylsäure oder deren Derivate, wie Acrylamid. Besonders bevorzugt ist Acrylsäure.

Die Säuregruppen der Monomere a) sind üblicherweise teilweise neutralisiert, vorzugsweise zu 25 bis 85 mol-%, bevorzugt zu 50 bis 80 mol-%, besonders bevorzugt 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 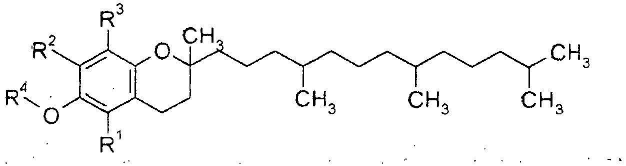 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindestens 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtig werden. Beispielsweise kann zur Herstellung der Monomerlösung eine Acrylsäure mit einem entsprechenden Gehalt an Hydrochinonhalbether verwendet werden.

Die Vernetzer b) sind Verbindungen mit mindestens zwei radikalisch polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A-0 530 438 beschrieben, Di- und Triacrylate, wie in EP-A-0 547 847, EP-A-0 559 476, EP-A-0 632 068, WO-A-93121237, WO-A-03/104299, WO-A-03/104300, WO-A-03/104301 und in DE-A-103 31 450 beschrieben, gemischte Acrylate, die neben Acrylatgruppen weitere ethylenisch ungesättigte Gruppen enthalten, wie in DE-A-103 314 56 und der älteren deutschen Anmeldung mit dem Aktenzeichen 10355401.7 beschrieben, oder Vernetzermischungen, wie beispielsweise in DE-A-195 43 368, DE-A-196 46 484, WO-A-90/15830 und WO-A-02/32962 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer b) sind Pentaerythritoldi- Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3-bis 15-fach ethoxylierten Glyzerins, des 3- bis 15-fach ethoxylierten Trimethylolpropans, des 3-bis 15-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerin oder Trimethylolpropans, sowie des 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine wie sie beispielsweise in WO-A-03/104301 beschrieben sind. Besonders vorteilhaft sind Di- und/oder Triacrylate des 3- bis 10-fach ethoxylierten Glyzerins.

Ganz besonders bevorzugt sind Di- oder Triacrylate des 1- bis 5- fach ethoxylierten und/oder propoxylierten Glyzerins. Am meisten bevorzugt sind die Triacrylate des 3-bis 5-fach ethoxylierten und/oder propoxylierten Glyzerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Bezogen auf das Monomer a) werden vorzugsweise weniger als 0,5 Gew.-%, besonders bevorzugt weniger als 0,3 Gew.-%, ganz besonders bevorzugt weniger als 0,15 Gew.-%, Vernetzer b) eingesetzt.

Geeignete Initiatoren c) sind Wasserstoffperoxid und organische Peroxide, wie Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butyl-per-2-ethylhexanoat, tert.-Butylperisononanoat, tert.-Butylpermaleat, tert.-Butylperbenzoat, Di-(2-ethylhexyl)peroxydicarbonat, Dicyclohexylperoxydicarbonat, Di-(4-tert.-butylcyclohexyl)peroxydicarbonat, Dimyristilperoxydi-carbonat, Diacetylperoxydicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylperneodekanoat.

Besonders bevorzugte Initiatoren c) sind Hydroperoxide, wie Wasserstoffperoxid und tert.-Butylhydroperoxid.

Damit die Initiatoren c) nicht vorzeitig zerfallen, beispielsweise katalysiert durch Spuren von Eisenionen, wird der Monomerlösung vorteilhaft ein Komplexbildner zugesetzt, beispielsweise das Natriumsalz der Ethylendiamintetraessigsäure. Die Konzentration des Komplexbildners in der Monomerlösung beträgt vorzugsweise von 0,005 bis 0,5 Gew.-%, besonders bevorzugt von 0,01 bis 0,1 Gew.-%, ganz besonders bevorzugt von 0,03 bis 0,05 Gew.-%.

Als Initiatoren d) werden Photoinitiatoren, Azoverbindungen und Redox-Initiatoren eingesetzt. Bevorzugt ist der Einsatz von wasserlöslichen Initiatoren.

Bevorzugt wird die Polymerisation durch Einwirkung energiereicher Strahlung ausgelöst, wobei man üblicherweise sogenannte Photoinitiatoren als Initiator d) verwendet. Hierbei kann es sich beispielsweise um sogenannte α-Spalter, H-abstrahierende Systeme oder auch um Azide handeln. Beispiele für solche Initiatoren sind Benzophenon-Derivate wie Michlers-Keton, Phenanthren-Derivate, Fluoren-Derivate, AnthrachinonDerivate, Thioxanton-Derivate, Cumarin-Derivate, Benzoinether und deren Derivate, Azoverbindungen, wie die oben genannten Radikalbildner, substituierte Hexaarylbisimidazole oder Acylphosphinoxide, insbesondere 2-Hydroxy-2-methylpropiophenon (Darocure® 1173). Beispiele für Azide sind 2-(N,N-Dimethylamino)-ethyl-4-azidocinnamat, 2-(N,N-Dimethyl-amino)-ethyl-4-azidonaphthylketon, 2-(N,N-Dimethylamino)-ethyl-4-azidobenzoat, 5-Azido-1-naphthyl-2'-(N,N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclohexanon und 2,6-Bis-(p-azidobenzyliden)-4-methylcyclohexanon.

Besonders bevorzugte Initiatoren d) sind Azoverbindungen, beispielsweise 2,2'-Azobis-isobutyronitril, 2,2'-Azobis(2,4-dimethylvaleronitril) und 2,2'-Azobis(4-methoxy-2,4-dimethylvaleronitril), insbesondere wasserlösliche Azoverbindungen, beispielsweise 2,2'-Azobis{2-[1-(2-hydroxyethyl)-2-imidazolin-2-yl]propan}dihydrochlorid, 2,2'-Azobis-(2-amidinopropan)dihydrochlorid, 2,2'-Azobis[2-(2-imidazolin-2-yl)propan]dihydrochlorid und 2,2'-Azobis[2-(5-methyl-2-imidazolin-2-yl)propan]dihydrochlorid. Ganz besonders bevorzugt sind 2,2'-Azobis[2-(2-imidazolin-2-yl)propan]dihydrochlorid und 2,2'-Azobis[2-(5-methyl-2-imidazolin-2-yl)propan]dihydrochlorid.

Vorzugsweise werden Azoverbindungen und/oder Photoinitiatoren als Initiatoren d) verwendet.

Die Initiatoren werden in üblichen Mengen eingesetzt, beispielsweise in Mengen von 0,001 bis 5 Gew.-%, vorzugsweise 0,01 bis 1 Gew.-%, bezogen auf die Monomeren a).

Das Molverhältnis von Initiator c) zu Initiator d) beträgt vorzugsweise mindestens 2:1, besonders bevorzugt mindestens 1:1, ganz besonders bevorzugt mindestens 1:2.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Polymerisationsinhibitoren können auch durch Absorption, beispielsweise an Aktivkohle, entfernt werden.

Die Monomerlösung kann zur Polymerisation in der Gasphase versprüht oder vertropft werden.

Im erfindungsgemäßen Verfahren können eine oder mehrere Sprühdüsen eingesetzt werden. Die einsetzbaren Sprühdüsen unterliegen keiner Beschränkung. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen) verwendet werden (beispielsweise von Düsen-Schlick GmbH, DE, oder von Spraying Systems Deutschland GmbH, DE).

Erfindungsgemäß bevorzugt sind Vollkegeldüsen. Darunter sind solche mit einem Öffnungswinkel des Sprühkegels von 60 bis 180° bevorzugt. Besonders bevorzugt sind Öffnungswinkel von 90 bis 120°. Der sich beim Versprühen einstellende mittlere Tropfendurchmesser ist erfindungsgemäß typischerweise kleiner 1000 µm, vorzugsweise kleiner 200 µm, bevorzugt kleiner 100 µm, sowie üblicherweise größer 10 µm, vorzugsweise größer 20 µm, bevorzugt größer 50 µm, und kann nach üblichen Methoden, wie Lichtstreuung, oder anhand der bei den Düsenherstellern erhältlichen Kennlinien bestimmt werden. Der Durchsatz je Sprühdüse beträgt zweckmäßig 0,1 bis 10 m³/h, häufig 0,5 bis 5 m³/h.

Der sich beim Versprühen einstellende Tröpfchendurchmesser ist zweckmäßig von 10 bis 1.000 µm, bevorzugt von 10 bis 500 µm, besonders bevorzugt von 10 bis 150 µm, ganz besonders bevorzugt von 10 bis 45 µm.

Bei der Vertropfung wird eine Monomerlösung unter Ausbildung von Tropfen in die Gasphase dosiert. Die Vertropfung der Monomerlösung kann beispielsweise mittels einer Vertropferplatte durchgeführt werden.

Eine Vertropferplatte ist eine Platte mit mindestens einer Bohrung, wobei die Flüssigkeit von oben durch die Bohrung tritt. Die Vertropferplatte bzw. die Flüssigkeit wird in Schwingungen versetzt, wodurch an der Unterseite der Vertropferplatte je Bohrung eine idealerweise monodisperse Tropfenkette erzeugt wird.

Die Anzahl und die Größe der Bohrungen werden gemäß der gewünschten Kapazität und Tropfengröße ausgewählt. Der Tropfendurchmesser beträgt dabei üblicherweise das 1,9fache des Durchmessers der Bohrung. Wichtig ist hierbei, dass die zu vertropfende Flüssigkeit nicht zu schnell durch die Bohrung tritt bzw. der Druckverlust über die Bohrung nicht zu groß ist. Ansonsten wird die Flüssigkeit nicht vertropft, sondern der Flüssigkeitsstrahl wird infolge der hohen kinetischen Energie zerrissen (versprüht). Die Geschwindigkeit, mit der die Monomerlösung durch die Bohrung tritt, beträgt vorzugsweise weniger als 0,2 m/s, besonders bevorzugt weniger als 0,1 m/s, ganz besonders bevorzugt weniger als 0,05 m/s. Der Druckverlust über die Bohrung beträgt vorzugsweise weniger als 1 bar, besonders bevorzugt weniger als 0,5 bar, ganz besonders bevorzugt weniger als 0,3 bar.

Die Vertropferplatte weist üblicherweise mindestens eine, vorzugsweise mindestens 10, besonders bevorzugt mindestens 50, und üblicherweise bis zu 10.000, vorzugsweise bis zu 5.000, besonders bevorzugt bis zu 1.000, Bohrungen auf, wobei die Bohrungen üblicherweise gleichmäßig über die Vertropferplatte verteilt sind, vorzugsweise in der sogenannten Dreiecksteilung, d.h. jeweils drei Bohrungen bilden die Ecken eines gleichseitigen Dreiecks.

Der Durchmesser der Bohrungen wird an die gewünschte Tropfengröße angepasst. Der mittlere Durchmesser der Tropfen beträgt üblicherweise mindestens 100 µm, vorzugsweise mindestens 150 µm, besonders bevorzugt mindestens 200 µm, und üblicherweise bis zu 2.000 µm, vorzugsweise bis zu 1.200 µm, besonders bevorzugt bis zu 600 µm. Der Anteil der Tropfen mit einen Durchmesser von weniger als 100 µm beträgt vorzugsweise mindestens 80 Gew.-%, besonders bevorzugt mindestens 90 Gew.-%, ganz besonders bevorzugt mindestens 95 Gew.-%.

Es kann vorteilhaft sein die Vertropferplatte auf eine Trägerplatte aufzulegen, wobei die Trägerplatte ebenfalls Bohrungen aufweist. Dabei weisen die Bohrungen der Trägerplatte einen größeren Durchmesser auf als die Bohrungen der Vertropferplatte auf und sind so angeordnet, dass sich unter jeder Bohrung der Vertropferplatte eine mit ihr konzentrische Bohrung der Trägerplatte befindet. Diese Anordnung ermöglicht einen schnellen Wechsel der Vertropferplatte, beispielsweise um Tropfen einer anderen Größe zu erzeugen. Ein derartiges System aus Vertropferplatte und Trägerplatte gilt als Vertropferplatte im Sinne dieser Erfindung, d.h. die Unterseite des Systems Vertropferplatte/Trägerplatte ist die Unterseite der Vertropferplatte.

Die Vertropfung kann aber auch mittels pneumatischer Ziehdüsen, Rotation, Zerschneiden eines Strahls oder schnell ansteuerbarer Mikroventildüsen durchgeführt werden.

In eine pneumatische Ziehdüse wird ein Flüssigkeitsstrahl zusammen mit einem Gasstrom durch eine Blende beschleunigt. Über die Gasmenge kann der Durchmesser der Flüssigkeitsstrahls und damit der Tropfendurchmesser beeinflusst werden.

Bei der Vertropfung durch Rotation tritt die Flüssigkeit durch die Öffnungen einer rotierenden Scheibe. Durch die auf die Flüssigkeit wirkende Fliehkraft werden Tropfen definierter Größe abgerissen. Die Rotationsvertropfung wird beispielsweise in DE-A 4308842 und US 6338438 beschrieben.

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

Die Vertropfung ist gegenüber der Versprühung bevorzugt, insbesondere bei Verwendung von Photoinitiatoren.

Die Polymerisation wird vorzugsweise in einer laminaren Gasströmung durchgeführt. Eine laminare Gasströmung ist eine Gasströmung, bei der sich die einzelnen Schichten der Strömung nicht vermischen, sondern parallel bewegen. Ein Maß für die Strömungsverhältnisse ist die Reynolds-Zahl (Re). Unterhalb einer kritischen Reynolds-Zahl (Reₖᵣᵢₜ) von 2300 ist die Gasströmung laminar. Die Reynolds-Zahl der laminaren Gasströmung beträgt vorzugsweise weniger als 2000, besonders bevorzugt weniger als 1500, ganz besonders bevorzugt weniger als 1000. Der untere Grenzfall der laminaren Inertgasströmung ist eine ruhende Inertgasatmosphäre (Re = 0), d.h., es wird nicht kontinuierlich Inertgas eingespeist.

Die Reaktion wird vorzugsweise in Gegenwart eines inerten Trägergases durchgeführt werden, wobei inert bedeutet, dass das Trägergas mit den Bestandteilen der Monomerlösung nicht reagieren kann. Das inerte Trägergas ist vorzugsweise Stickstoff. Der Sauerstoffgehalt des inerten Trägergases beträgt vorteilhaft unter 5 Vol.-%, vorzugsweise unter 2 Vol.-%, besonders bevorzugt unter 1 Vol.-%.

Das inerte Trägergas kann im Gleichstrom oder im Gegenstrom zu den frei fallenden Tropfen der Monomerlösung durch den Reaktionsraum geführt werden, bevorzugt im Gleichstrom. Vorzugsweise wird das Trägergas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1 %.

Die Gasgeschwindigkeit wird vorzugsweise so eingestellt, dass die Strömung im Reaktor gerichtet ist, beispielsweise liegen keine der allgemeinen Strömungsrichtung entgegengesetzte Konvektionswirbel vor, und beträgt beispielsweise 0,1 bis 2 m/s, vorzugsweise 0,5 bis 1,8 m/s, bevorzugt 1 bis 1,5 m/s.

Die Temperatur im Reaktionsraum beträgt bei der thermisch induzierten Polymerisation vorzugsweise 70 bis 250°C, besonders bevorzugt 100 bis 200°C, ganz besonders bevorzugt 120 bis 180°C.

Das Trägergas wird zweckmäßigerweise vor dem Reaktor auf die Reaktionstemperatur vorgewärmt.

Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das der Reaktionsraum verlassende Trägergas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Trägergas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Das Reaktionsprodukt kann dem Reaktor in üblicher Weise entnommen werden, vorzugsweise am Boden über eine Förderschnecke, und gegebenenfalls bis zur gewünschten Restfeuchte und zum gewünschten Restmonomerengehalt getrocknet werden.

In dem erfindungsgemäßen Verfahren werden vorzugsweise relativ langsame Initiatoren c) mit vorzugsweise schnelleren Initiatoren d) kombiniert. Die Initiatoren d) bewirken einen schnellen Start der Polymerisation und einen ausreichend hohen Umsatz. Die Initiatoren c) zerfallen erst später und bewirken eine Vernetzung der Polymerkette durch Pfropfungsreaktionen. Diese Pfropfungsreaktionen scheinen bevorzugt an der Phasengrenze stattzufinden, so dass Polymerpartikel mit einer höhervernetzten Schale erhalten werden.

Die erfindungsgemäß einsetzbaren Initiatoren c) sind bei diesen erwünschten Vernetzungsreaktionen wirksamer als beispielsweise Persulfate. Außerdem bilden Persulfate mit den erfindungsgemäß besonders bevorzugten Azoverbindungen schwerlösliche Niederschläge, die insbesondere in trockenem Zustand zu spontaner Zersetzung neigen.

Dies bedeutet, dass das erfindungsgemäße Verfahren die Herstellung strukturierter Polymerpartikel ermöglicht, wie sie bislang erst durch eine zusätzliche Nachvemetzung erhalten werden konnten.

Selbstverständlich können die Polymerpartikel anschließend agglomeriert und/oder nachvernetzt werden.

Geeignete Agglomerationshilfsmittel sind Wasser und mit Wasser mischbare organische Lösungsmittel, wie Alkohole, Tetrahydrofuran und Aceton, wobei zusätzlich wasserlösliche Polymere verwendet werden können.

Geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyglycidylverbindungen, wie in EP-A-0 083 022, EP-A-0 543 303 und EP-A-0 937 736 beschrieben, di- oder polyfunktionelle Alkohole, wie in DE-C-33 14 019, DE-C-35 23 617 und EP-A-0 450 922 beschrieben, oder β-Hydroxyalkylamide, wie in DE-A-102 04 938 und US-6,239,230 beschrieben.

Des weiteren sind in DE-A-40 20 780 zyklische Karbonate, in DE-A-198 07 502 2-Oxazolidon und dessen Derivate, wie 2-Hydroxyethyl-2-oxazolidon, in DE-A-198 07 992 Bis- und Poly-2-oxazolidinone, in DE-A-198 54 573 2-Oxotetrahydro-1,3-oxazin und dessen Derivate, in DE-A-198 54 574 N-Acyl-2-Oxazolidone, in DE-A-102 04 937 zyklische Harnstoffe, in DE-A-103 34 584 bizyklische Amidacetale, in EP-A-1 199 327 Oxetane und zyklische Harnstoffe und in WO-A-03/031482 Morpholin-2,3-dion und dessen Derivate als geeignete Nachvernetzer beschrieben.

Zur Bestimmung der Güte werden die getrockneten wasserabsorbierenden Polymerpartikel mit den nachfolgend beschriebenen Testmethoden geprüft.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymere werden vor der Messung gut durchmischt.

### Restmonomere

Die Restmonomeren der wasserabsorbierenden Polymerpartikel werden gemäß der von der EDANA (European Disposables and Nonwovens Association) empfohlenen Testmethode Nr. 410.2-02 "Residual monomers" bestimmt.

### Zentrifugenretentionskapazität (CRC Centrifuge Retention Capacity)

Die Zentrifugenretentionskapazität der wasserabsorbierenden Polymerpartikel wird gemäß der von der EDANA (European Disposables and Nonwovens Association) empfohlenen Testmethode Nr. 441.2-02 "Centrifuge retention capacity" bestimmt.

### Absorption unter Druck (AUL Absorbency Under Load)

Die Absorption unter Druck der wasserabsorbierenden Polymerpartikel wird gemäß der von der EDANA (European Disposables and Nonwovens Association) empfohlenen Testmethode Nr. 442.2-02 " Absorption under pressure" bestimmt.

### Extrahierbare (Extractables)

Die extrahierbaren Anteile der wasserabsorbierenden Polymerpartikel werden gemäß der von der EDANA (European Disposables and Nonwovens Association) empfohlenen Testmethode Nr. 470.2-02 " Extractables" bestimmt.

Die EDANA-Testmethoden sind beispielsweise erhältlich bei der European Disposables and Nonwovens Association, Avenue Eugene Plasky 157, B-1030 Brüssel, Belgien.

### Beispiele:

### Beispiel 1 (Vergleich)

14,275 kg Natriumacrylat (37,5 gew.-%ige Lösung in Wasser) und 1,367 kg Acrylsäure wurden mit 0,358 kg Wasser, 22 g 15-fach ethoxiliertem Trimethylolpropantriacrylat und 80 g EDTA (10 gew.-%ige Lösung des Natriumsalzes von Ethylendiamintetraessigsäure in Wasser) gemischt. Die Lösung wurde nach Zugabe von 33 g 2,2'-Azobis[2-(2-imidazolin-2-yl)propan]dihydrochlorid (3 gew.-%ige Lösung in Wasser) in einen erwärmten, mit Stickstoffatmosphäre gefüllten Vertropfungsturm vertropft (180°C, 12m Höhe, 2m Breite, Gasgeschwindigkeit 0,1 m/s im Gleichstrom). Die Dosiergeschwindigkeit betrug 16 kg/h. Die Vertropferplatte wies 37 Bohrungen ä 170 µm auf. Der Durchmesser der Vertropferplatte betrug 65 mm. Der Initiator wurde kurz vor dem Vertropfer über einen statischen Mischer mit der Monomerlösung gemischt.

Die wasserabsorbierenden Polymerpartikel hatten folgende Eigenschaften:

| | |
|---|---|
| Restmonomere | 0,19 Gew.-% |
| CRC: | 40 g/g |
| AUL0.7psi | 16 g/g |
| Extrahierbare | 12 Gew.-% |

### Beispiel 2

Es wurde verfahren wie unter Beispiel 1. Zusätzlich wurden 55 g Wasserstoffperoxid (3 gew.-%ige Lösung in Wasser) dosiert.

Die wasserabsorbierenden Polymerpartikel hatten folgende Eigenschaften:

| | |
|---|---|
| Restmonomere | 0.16 Gew.-% |
| CRC: | 36 g/g |
| AUL0.7psi | 20 g/g |
| Extrahierbare | 9 Gew.-% |

### Beispiel 3

Es wurde verfahren wie unter Beispiel 1. Zusätzlich wurden 110 g Wasserstoffperoxid (3 gew.-%ige Lösung in Wasser) dosiert.

Die wasserabsorbierenden Polymerpartikel hatten folgende Eigenschaften:

| | |
|---|---|
| Restmonomere | 0,12 Gew.-% |
| CRC: | 33 g/g |
| AUL0.7psi | 25 g/g |
| Extrahierbare | 7 Gew.-% |

## Patentansprüche

1. Verfahren zur Herstellung wasserabsorbierender Polymerpartikel durch Polymerisation von Tropfen einer Monomerlösung, enthaltend
a) mindestens ein wasserlösliches ethylenisch ungesättigtes Monomer, wobei die Löslichkeit des Monomeren in Wasser bei 23°C mindestens 1 g/100 g Wasser beträgt,
b) wahlweise einen Vernetzer,
c) mindestens einen Initiator,
d) mindestens einen weiteren Initiator und
e) Wasser,
wobei die Monomerlösung in der Gasphase vertropft oder versprüht wird, **dadurch gekennzeichnet, dass** der Initiator c) ein Peroxid, mit Ausnahme von Persulfat, ist, der Initiator d) eine Azoverbindung und/oder ein Photoinitiator und/oder ein Redox-Initiator ist und das Molverhältnis von Initiator c) zu Initiator d) mindestens 1:8 beträgt.

2. Verfahren gemäß Anspruch 1, **dadurch gekennzeichnet, dass** das Monomer a) mindestens eine Säuregruppe hat.

3. Verfahren gemäß Anspruch 2, **dadurch gekennzeichnet, dass** die Säuregruppen der Monomeren a) zumindest teilweise neutralisiert sind.

4. Verfahren gemäß einem der Ansprüche 1 bis 3, **dadurch gekennzeichnet, dass** die Monomerlösung weniger als 0,5 Gew.-% des Vernetzers b), bezogen auf das Monomer a), enthält.

5. Verfahren gemäß einem der Ansprüche 1 bis 4, **dadurch gekennzeichnet, dass** der Initiator c) ein Hydroperoxid ist.

6. Verfahren gemäß einem der Ansprüche 1 bis 5, **dadurch gekennzeichnet, dass** der Initiator d) eine Azoverbindung und/oder ein Photoinitiator ist.

7. Verfahren gemäß einem der Ansprüche 1 bis 6, **dadurch gekennzeichnet, dass** das Molverhältnis von Initiator c) zu weiterem Initiator d) mindestens 1:1 beträgt.

8. Verfahren gemäß einem der Ansprüche 1 bis 7, **dadurch gekennzeichnet, dass** die Tropfen einen mittleren Durchmesser von mindestens 200 µm aufweisen.

9. Verfahren gemäß einem der Ansprüche 1 bis 8, **dadurch gekennzeichnet, dass** mindestens 90 Gew.-% der Tropfen einen Durchmesser von mindestens 100 µm aufweisen.

## Claims

1. A process for producing water-absorbing polymer particles by polymerizing droplets of a monomer solution comprising
a) at least one water-soluble ethylenically unsaturated monomer, where the solubility of the monomer in water at 23°C is at least 1 g/100 g of water,
b) if desired, a crosslinker,
c) at least one initiator,
d) at least one further initiator and
e) water,
where the monomer solution is dropletized or sprayed in the gas phase,
wherein the initiator c) is a peroxide with the exception of persulfate, the initiator d) is an azo compound and/or a photoinitiator and/or a redox initiator, and the molar ratio of initiator c) to initiator d) is at least 1:8.

2. The process according to claim 1, wherein the monomer a) has at least one acid group.

3. The process according to claim 2, wherein the acid groups of the monomers a) have been neutralized at least partly.

4. The process according to any of claims 1 to 3, wherein the monomer solution comprises less than 0.5% by weight of the crosslinker b) based on the monomer a).

5. The process according to any of claims 1 to 4, wherein the initiator c) is a hydroperoxide.

6. The process according to any of claims 1 to 5, wherein the initiator d) is an azo compound and/or a photoinitiator.

7. The process according to any of claims 1 to 6, wherein the molar ratio of initiator c) to further initiator d) is at least 1:1.

8. The process according to any of claims 1 to 7, wherein the droplets have a mean diameter of at least 200 µm.

9. The process according to any of claims 1 to 8, wherein at least 90% by weight of the droplets have a diameter of at least 100 µm.

## Revendications

1. Procédé pour la préparation de particules polymères absorbant l'eau par polymérisation de gouttes d'une solution de monomères, contenant
a) au moins un monomère éthyléniquement insaturé soluble dans l'eau, la solubilité du monomère dans l'eau à 23°C étant d'au moins 1 g/100 g d'eau,
b) au choix un réticulant,
c) au moins un initiateur,
d) au moins un autre initiateur et
e) de l'eau,
la solution de monomères étant introduite par gouttes ou pulvérisée dans la phase gazeuse, **caractérisé en ce que** l'initiateur c) est un peroxyde, à l'exception du persulfate, l'initiateur d) est un composé azo et/ou un photo-initiateur et/ou un initiateur de type redox et le rapport molaire de l'initiateur c) à l'initiateur d) vaut au moins 1:8.

2. Procédé selon la revendication 1, **caractérisé en ce que** le monomère a) présente au moins un groupe acide.

3. Procédé selon la revendication 2, **caractérisé en ce que** les groupes acides des monomères a) sont au moins partiellement neutralisés.

4. Procédé selon l'une quelconque des revendications 1 à 3, **caractérisé en ce que** la solution de monomères contient moins de 0,5% en poids de réticulant b), par rapport au monomère a).

5. Procédé selon l'une quelconque des revendications 1 à 4, **caractérisé en ce que** l'initiateur c) est un hydroperoxyde.

6. Procédé selon l'une quelconque des revendications 1 à 5, **caractérisé en ce que** l'initiateur d) est un composé azo et/ou un photo-initiateur.

7. Procédé selon l'une quelconque des revendications 1 à 6, **caractérisé en ce que** le rapport molaire de l'initiateur c) à l'autre initiateur d) vaut au moins 1:1.

8. Procédé selon l'une quelconque des revendications 1 à 7, **caractérisé en ce que** les gouttes présentent un diamètre moyen d'au moins 200 µm.

9. Procédé selon l'une quelconque des revendications 1 à 8, **caractérisé en ce qu'**au moins 90% en poids de gouttes présentent un diamètre d'au moins 100 µm.
